# EUROPÄISCHE PATENTSCHRIFT

(11) **EP 3 741 698 B1**
(45) Veröffentlichungstag und Bekanntmachung des Hinweises auf die Patenterteilung: **16.07.2025**
(21) Anmeldenummer: 20175519.6
(22) Anmeldetag: 19.05.2020
(51) Int. Cl.: B65D 5/02, A22C 11/02, A22C 11/10

(54) **VORRICHTUNG ZUM VERSCHLIESSEN VON MIT EINER PASTÖSEN MASSE GEFÜLLTEN SCHLAUCHFÖRMIGEN HÜLLEN UND VERFAHREN ZUM BETREIBEN DER VORRICHTUNG**
DEVICE FOR CLOSING TUBULAR CASINGS FILLED WITH A PASTY MASS AND METHOD FOR OPERATING THE DEVICE
DISPOSITIF DE FERMETURE DES ENVELOPPES TUBULAIRES REMPLIES D'UNE MASSE PÂTEUSE ET PROCÉDÉ DE FONCTIONNEMENT DU DISPOSITIF

(30) Priorität: 21.05.2019 DE 102019113542
(43) Veröffentlichungstag der Anmeldung: 25.11.2020
(73) Patentinhaber: VEMAG Maschinenbau GmbH, 27283 Verden/Aller (DE); Tipper Tie technopack GmbH, 21509 Glinde (DE)
(72) Erfinder: Martin, Knut, 44267 Dortmund (DE); Köhler, Sven, 27299 Langwedel (DE); Kordel, Christian, 27308 Kirchlinteln (DE); Jäckel, Gunnar, 21266 Jesteburg (DE)
(74) Vertreter: Gramm, Lins & Partner Patent- und Rechtsanwälte PartGmbB

(56) Entgegenhaltungen:
- EP-A1- 1 513 407
- EP-A1- 1 958 511
- EP-A1- 2 801 258
- DE-A1- 102005 044 877
- US-B1- 6 585 580

## Beschreibung

Die Erfindung betrifft eine Vorrichtung zum Verschließen mittels einer Befüllmaschine von mit einer pastösen Masse gefüllten schlauchförmigen Hüllen, insbesondere von mit Wurstbrät gefüllten Därmen, zu Produkten mit einem eine Auslassöffnung aufweisenden Füllrohr, einer Bremse und quer zu einer Befüllrichtung aufeinander zu bewegbaren Clipperscheren und einer das Kaliber der Produkte berührungslos ermittelnden Messeinrichtung. Außerdem betrifft die Erfindung ein Verfahren zum Betreiben einer Vorrichtung zum Verschließen von mit einer pastösen Masse gefüllten schlauchförmigen Hüllen zu Produkten mit einem eine Auslassöffnung aufweisenden Füllrohr, einer Bremse, quer zu einer Füllrichtung aufeinander zu bewegbaren Clipperscheren und einer das Kaliber der Produkte berührunglos ermittelnden Messeinrichtung.

Eine solche Vorrichtung ist beispielsweise aus der DE 10 2005 044 877 A1 bekannt. Eine ähnliche Vorrichtung offenbart die EP 2 783 571 B1.

Aus der EP 2 801 258 A1 ist eine Befüllmaschine zur Wurstherstellung bekannt, bei der zum Bestimmen von mindestens einem die Wurstform betreffenden Parameter, ein Sensor, ein Detektor und eine auswärtige Einrichtung vorgesehen sind, wobei die auswärtige Einrichtung in der Steuerung der Befüllmaschine angeordnet sein kann. Wurstverpackungsvorrichtungen weisen als Hauptkomponenten eine Fülleinrichtung, eine Verschließeinrichtung (Clipper) für die befüllte Hülle und eine Transporteinrichtung für die hergestellten Produkte auf. Bei den Produkten kann es sich beispielsweise um Würste handeln. Die Verschließeinrichtung ist mit den Clipperscheren versehen, mit denen die befüllte Hülle eingeschnürt und die pastöse Masse in der Hülle verdrängt werden kann, um ein Wurstende zu bilden, indem in den Bereich der vom Füllgut verdrängten Hülle ein oder zwei Clips gesetzt werden, und gegebenenfalls der Hüllenstrang durchtrennt wird. Das Befüllen der Hülle erfolgt über das Füllrohr, durch das die pastöse Masse unter Druck in einen einseitig geschlossenen Schlauch aus Hüllenmaterial strömt. Aus dem Füllrohr ist das Hüllenmaterial in einem gerafften Vorrat angeordnet. Durch den Druck im Füllrohr wird die pastöse Masse gleichmäßig in die Hülle eingefüllt, wobei weiteres Hüllenmaterial gegen die Kraft der Bremse vom Vorrat abgezogen wird. Ist die gewünschte Produktgröße erreicht, wird die Hülle eingeschnürt und verschlossen.

Zum Einschnüren der Hülle sind die Clipperscheren vorgesehen, die in einer vertikalen Richtung angeordnet sein und dann gegenläufig bewegt werden können. Sie können von einer maximal geöffneten Position in eine geschlossene Position bewegt werden. Während die Clipperscheren geschlossen sind und der oder die Clips gesetzt werden, ist das Befüllen der Hülle mit pastöser Masse unterbrochen. Wenn die Clipperscheren wieder vollständig geöffnet sind, wird der Befüllvorgang wieder fortgesetzt und der gebildete Produktstrang kann zwischen den beiden geöffneten Clipperscheren hindurchgeführt werden. Damit die Verschließvorrichtung universell einsetzbar ist, müssen die Clipperscheren so weit öffnen können, dass Produkte mit dem maximal gewünschten Kaliber (Durchmesser) hergestellt werden können.

Bei der industriellen Wurstherstellung wird eine möglichst hohe Portionierleistung gefordert. Um dies zu erreichen, ist es erforderlich, die Start- und Stoppbewegungen der Befüllmaschine und der Verschließmaschine in Bezug auf den Takt der Clipperscheren und der Bewegung des Förderwerks möglichst exakt aufeinander abzustimmen. Insbesondere wenn Würste kleinen Kalibers hergestellt werden ist die Zeit, bis die Clipperscheren in ihrer maximal geöffneten Position sind eine Totzeit, weil der Befüllvorgang noch nicht einsetzt, obwohl der Wurststrang mit dem kleineren Kaliber die Clipperscheren bereits in einer nicht vollständig geöffneten Position passieren könnte.

In der EP 2 783 571 B1 ist hierzu vorgesehen, dass die Verschlussvorrichtung und die Befüllmaschine über eine Kommunikationsschnittstelle derart Prozessdaten austauschen, dass das Bewegungsprofil der gegenüberliegenden Clipperscheren und das Geschwindigkeitsprofil, mit dem pastöse Masse aus dem Füllrohr austritt von einer Steuereinrichtung automatisch zueinander passend eingestellt werden, wobei das Geschwindigkeitsprofil zyklisch wiederholt wird und die Startzeit eines Befüllzyklus in Abhängigkeit von der Position der Clipperscheren bestimmt wird und die Steuereinrichtung ein entsprechendes Startsignal zum Befüllen frühestens dann sendet, wenn ein Abstand der Clipperscheren zueinander groß genug ist, dass das Produkt durch die Öffnung der Clipperscheren hindurchpasst.

Das Kaliber des Produkts muss manuell in die Befüllvorrichtung eingegeben werden. Insbesondere dann, wenn die Herstellung von Produkten großen Kalibers auf Produkte kleinen Kalibers - oder umgekehrt - umgestellt wird, kann es hierbei zu Fehlern kommen. Erfolgt die Kalibereingabe nicht oder nicht exakt, beginnt der Befüllvorgang bereits dann, wenn die Clipperscheren noch keine ausreichend große geöffnete Position erreicht haben. Die Befüllung der Hülle erfolgt dann gegen die Clipperscheren, was im ungünstigsten Fall zum Aufreißen der Hülle und damit zum Stillstand der Produktion führt.

Das Kaliber des Produktes kann bei der aus der EP 2 783 571 B1 bekannten Vorrichtung dadurch bestimmt werden, dass zur Erfassung der Prallheit der befüllten Wursthülle ein Taststempel aufgedrückt wird und der vom Taststempel zurückgelegte Weg und die zum Bewegen erforderliche Kraft erfasst werden. Aus dem zurückgelegten Weg bis zum Kraftanstieg lässt sich zwar das Kaliber errechnen, bei empfindlichen Wursthüllen besteht aber bei der berührenden Messung die Gefahr, dass sie beschädigt werden und beispielsweise einreißen.

Aus der DE 10 2005 044 877 A1 ist eine Portionier- und Verpackungsvorrichtung mit einer Fördereinrichtung für Füllgut, einem daran angeschlossenen Füllrohr und einer sich daran stromabwärts anschließenden Verschließvorrichtung bekannt, bei der die Portionierleistung dadurch erhöht werden soll, dass das Füllgut in einem kontinuierlichen Volumenstrom durch eine Mündung des Füllrohres in eine einseitig verschlossene, schlauchförmige Verpackungshülle gefördert wird, die Verpackungshülle während des Füllens stromabwärts des Füllrohres zu einem Schlauchzopf eingeschnürt und mit einem Verschlusselement verschlossen wird, wobei das Einschnüren und Verschließen in periodischen Intervallen erfolgt, die auf Grundlage einer ausgewählten Portionsgröße und des kontinuierlichen Volumenstroms berechnet wurden.

Von dieser Problemstellung ausgehend soll eine Vorrichtung geschaffen werden, mit der Fehleingaben des Kalibers vermieden werden.

Zur Problemlösung zeichnet sich eine gattungsgemäße Vorrichtung dadurch aus, dass die Messeinrichtung so eingerichtet ist, dass sie ein Signal zur Anpassung des abgestimmten Betriebs an das Kaliber der Produkte an die Steuereinheit abgibt.

Das in der Produktion automatisch ermittelte Kaliber kann dann zur Steuerung der Befüllmaschine verwendet werden. Da keine manuelle Eingabe des Kalibers mehr notwendig ist, werden Fehleingaben wirkungsvoll vermieden und sichergestellt, dass mit der Befüllung der Hülle nicht begonnen wird, bevor die Clipperscheren sich nicht in einer ausreichend weit geöffneten Position befinden, um von dem Produktstrang passiert werden zu können.

Vorzugsweise besteht die Messeinrichtung aus einem Sender, einem Detektor und einer Auswerteeinheit. Der Sender kann eine Lichtquelle und der Detektor ein hell/dunkel-Empfänger sein. Der dunkle Bereich kann in der Auswerteeinrichtung dann als das Kaliber des Produkts erkannt werden.

Wenn die Messeinrichtung bezogen auf die Befüllrichtung hinter der Auslassöffnung des Füllrohrs und vor der Bremse angeordnet ist, wird der Durchmesser der gerafften Hülle ermittelt, der abhängig ist von der Dicke der schlauchförmigen Hülle und ihrem Durchmesser. In der Auswerteeinrichtung muss der ermittelte Wert dann entsprechende dem Hüllendurchmesser und seiner Materialdicke korrigiert werden, um das Kaliber des Produktes zu errechnen.

Wenn die Messeinrichtung hinter der Bremse und vor den Clipperscheren oder hinter den Clipperscheren angeordnet ist, wird unmittelbar der Durchmesser der befüllten Hülle und damit das Kaliber des Produktes bestimmt.

Der Vorrichtung zum Verschließen ist eine Befüllmaschine zum Einfüllen der pastösen Masse vorgeordnet. Es kann eine Steuereinheit zum zeitlich aufeinander abgestimmten Betrieb der Verschließvorrichtung und der Befüllmaschine vorgesehen sein, wobei die Messeinrichtung dann so eingerichtet ist, dass sie ein Signal zur Anpassung des abgestimmten Betriebs an das Kaliber der Produkte an die Steuereinheit abgibt. Die Steuereinheit kann dann geeignet sei, die Anpassung so vorzunehmen, dass die Befüllmaschine mit dem Befüllen der Hülle beginnt, während sich die Clipperscheren von einer geschlossenen Position in Richtung einer geöffneten Position bewegen. Denkbar ist es, dass die Steuereinheit dabei die Anpassung so vornehmen kann, dass die Befüllmaschine mit dem Befüllen umso früher beginnt, je kleiner das Kaliber des Produktes ist.

Weil das Befüllen der Hülle mit pastöser Masse unterbrochen ist, wenn die Clipperscheren aus einer geschlossenen Position, in der sie zueinander einen minimalen Abstand einnehmen und die in die Hülle eingefüllte pastöse Masse verdrängt haben, in Richtung einer geöffneten Position, in der sie zueinander einen maximalen Abstand einnehmen, bewegt werden, wird die erfindungsgemäße Vorrichtung, weiterhin erfindungsgemäß dadurch betrieben, dass mit dem Befüllen der Hülle mit pastöser Masse wieder begonnen wird, wenn die Clipperscheren eine Position erreicht haben, in der ihr Abstand mindestens so groß ist wie das von der Messeinrichtung ermittelte Kaliber und diese Position zeitlich vor der geöffneten Position erreicht wird. Damit beginnt das Befüllen der Hülle nicht erst dann, wenn die Clipperscheren vollständig geöffnet sind, sondern bereits dann, wenn ihr Abstand zueinander es zulässt, dass das produzierte Kaliber zwischen ihnen hindurchgeführt werden kann.

Mit Hilfe von Zeichnungen sollen Ausführungsbeispiele der Erfindung nachfolgend näher beschrieben werden. Es zeigen:
- Figur 1 -: die schematische und perspektivische Darstellung einer Befülleinrichtung und einer nachgeordneten Verschließeinrichtung;
- Figur 2 -: eine vergrößerte Darstellung aus Figur 1;
- Figur 4 -: eine Seitenansicht der Anordnung nach Figur 1 ;
- Figur 5 -: eine vergrößerte Einzelheit aus Figur 4;
- Figur 6 -: eine weiter vergrößerte Teilansicht aus Figur 4;
- Figur 7 -: eine perspektivische und schematische Darstellung eines ersten Ausführungsbeispieles;
- Figur 8 -: die Seitenansicht nach Figur 7;
- Figur 9 -: eine perspektivische und schematische Darstellung eines zweiten Ausführungsbeispieles;
- Figur 10 -: die Seitenansicht nach Figur 9;
- Figur 11 -: eine perspektivische und schematische Darstellung eines dritten Ausführungsbeispieles;
- Figur 12 -: die Seitenansicht nach Figur 11;
- Figur 13 -: die Darstellung nach Figur 7 mit angedeutetem Betrieb der Messeinrichtung;
- Figur 14 -: die Ansicht gemäß Sichtpfeil XIV nach Figur 13;
- Figur 15 -: eine Teildarstellung aus Figur 14;
- Figur 16 -: die Ansicht gemäß Sichtpfeil XVI nach Figur 13.

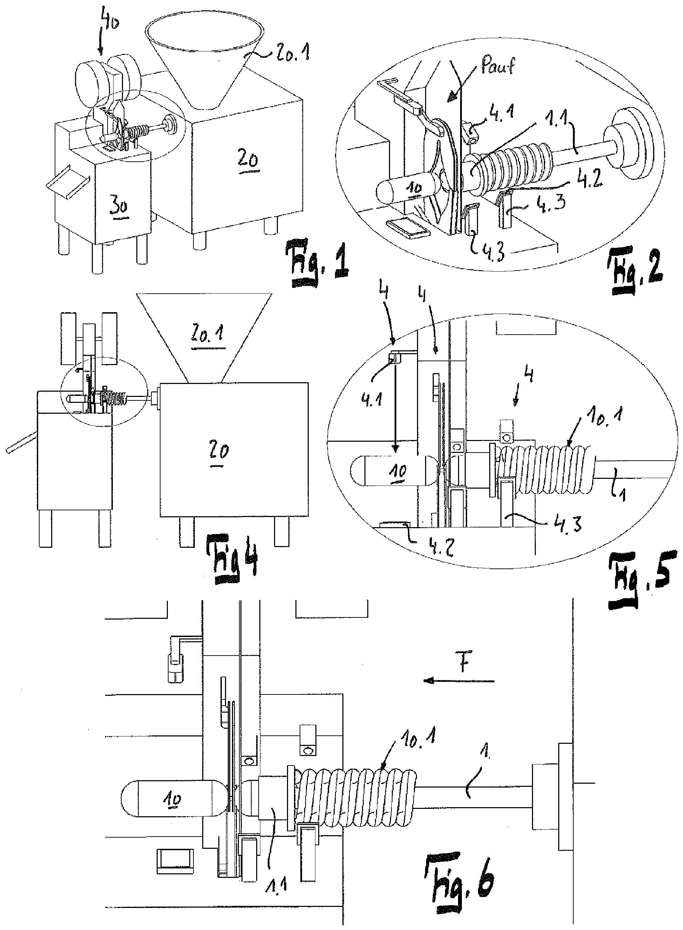

Die in Figur 1 dargestellte Anordnung einer Anlage zur Herstellung von Würsten ist hinreichend bekannt. Über einen Trichter 20.1 wird Wurstbrät in die Befüllmaschine 20 eingefüllt. Über deren Füllrohr 1 wird das Wurstbrät in den Darm 10.1 eingefüllt, der vor einer Bremse 2, in diesem Fall der Darmbremse gerafft zu einer Darmraupe auf dem Füllrohr 1 angeordnet ist. Das Befüllen der Hülle bzw. des Darmes 10.1 erfolgt gegen die Bremse 2, und die erzeugte Wurst wird gegen die Kraft der Bremse 2 in Füllrichtung F abgezogen und über eine hier nicht näher dargestellte Transporteinrichtung abgeführt.

Die Verschließvorrichtung 40 weist zwei gegenläufig angetriebene und miteinander gekoppelte Clipperscheren 3.1, 3.2 auf. Diese Clipperscheren 3.1, 3.2 bewegen sich in vertikaler Richtung von einer in den Figuren dargestellten maximal geöffneten Position P_{auf} in eine nicht näher dargestellte geschlossene Position P_{zu}, in der der Darm 10.1 zusammengequetscht wird. Die Clipperscheren 3.1, 3.2 sind jeweils zweiteilig ausgebildet. Die beiden Teile 3.1.1, 3.1.2 und 3.2.1, 3.2.2 können in horizontaler Richtung (Füllrichtung F) relativ zueinander bewegt werden, wodurch das in den Darm 10.1 eingefüllte Wurstbrät verdrängt wird. In diesen dünnen Darmstrang werden dann ein oder zwei Clips gesetzt, um geschlossene Wurstenden auszubilden. Zwischen den beiden Clips kann gegebenenfalls der Darmstrang aufgetrennt werden, sodass einzelne Würste 10, die nicht mehr miteinander verbunden sind, hergestellt und aus dem Clipper 30 abtransportiert werden können.

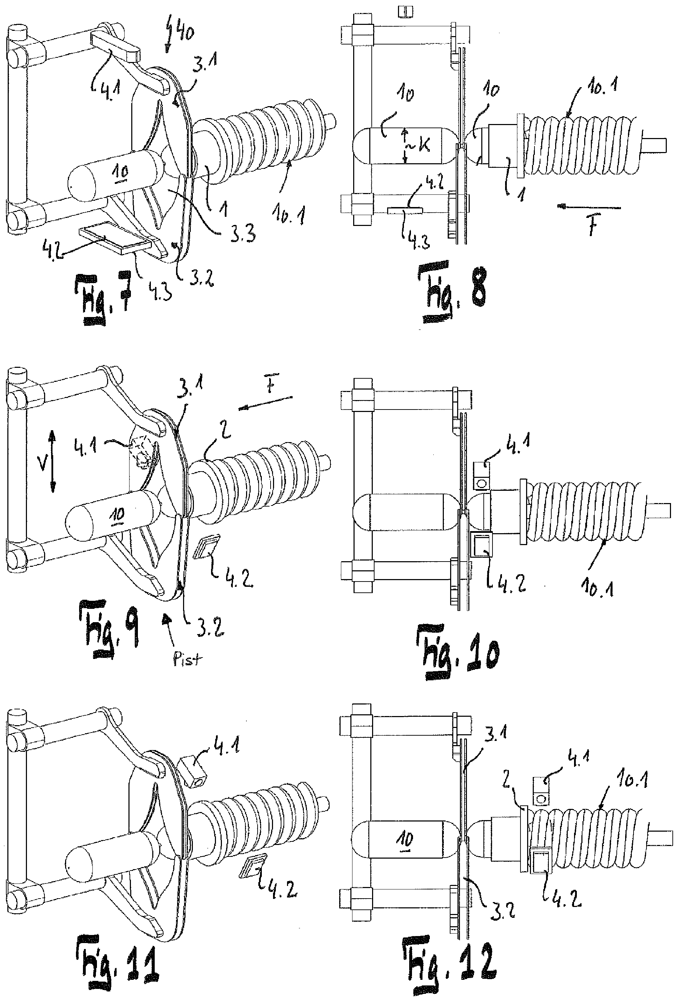

Figur 5 zeigt drei mögliche Anordnungen der Messeinrichtung 4. Eine erste Anordnung ist detailliert in Figuren 7 und 8 dargestellt. In Füllrichtung F hinter den Clipperscheren 3.1, 3.2 ist oberhalb der Wurst 10 ein lichtemittierender Sender 4.1 und unterhalb der Wurst 10 ein Empfänger 4.2 angeordnet, der die auf ihn auftreffenden Lichtstrahlen erkennt. Über die Auswerteeinheit 4.3 kann aus den Stellen, an denen keine Lichtstrahlen auf den Empfänger 2 auftreffen, das Kaliber K der Wurst 10 bestimmt werden. Das Kaliber K ist der Durchmesser D der Wurst 10.

In Figuren 9 und 10 ist eine zweite Anordnung der Messeinrichtung 4 dargestellt. Der Sender 4.1 und der Empfänger 4.2 sind in Füllrichtung F zwischen der Darmbremse 2 und den Clipperscheren 3.1, 3.2 angeordnet und detektieren damit das Kaliber K der aus dem Füllrohr 1 austretenden Wurst 10.

Eine dritte Anordnung der Messvorrichtung 4 ist in Figuren 11 und 12 dargestellt. Der Sender 4.1 und der Empfänger 4.2 sind vor der Darmbremse 2 angeordnet und ermitteln damit den Durchmesser der gerafften Darmraupe, der größer ist als das Kaliber K der Wurst 10 und vom Durchmesser des Darmes 10.1 und dessen Dicke abhängt. Über diese bekannten Daten kann in der Auswerteeinrichtung 4.3 in Abhängigkeit der gewünschten Länge der Wurst 10 deren Durchmesser D und damit ihr Kaliber K ausgerechnet werden.

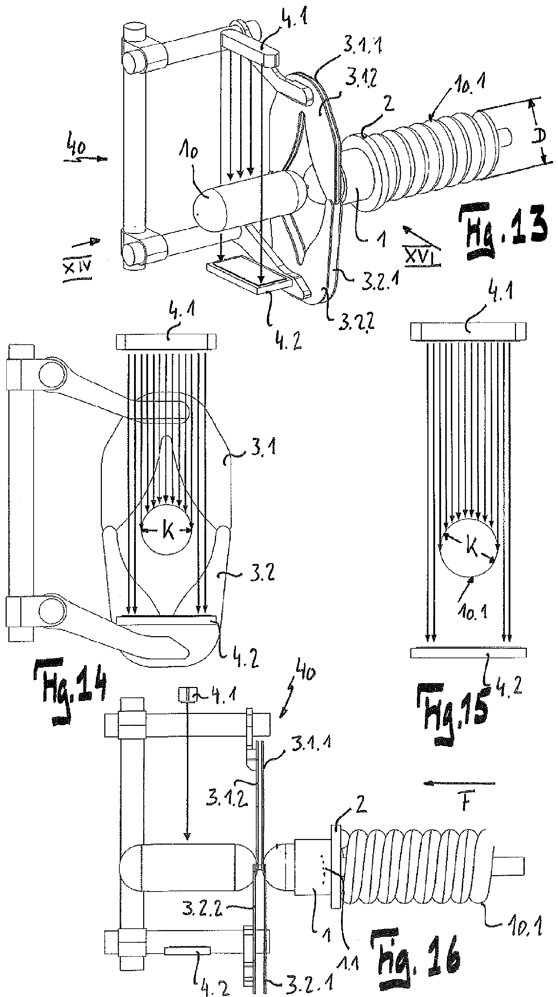

Die Bestimmung des Kalibers K der Wurst 10 durch Aussenden der Lichtstrahlen vom Sender 4.1 bzw. ihres Empfangs vom Empfänger 4.2 ist in den Figuren 13 bis 15 schematisch dargestellt. Wenn die Clipperscheren 3.1, 3.2 von ihrer vollständig geöffneten Position P_{auf} in die vollständig geschlossene Position P_{zu} und aus dieser wieder zurück in die voll geöffnete Position P_{auf} bewegt werden, ist ein Arbeitszyklus der Verschließvorrichtung ausgeführt. Innerhalb dieses Arbeitstaktes muss sichergestellt sein, dass kein Wurstbrät aus dem Füllrohr 1 austritt, wenn die Öffnung 3.3 der Clipperscheren 3.1, 3.2 kleiner ist als das Kaliber K der Wurst 10, weil das dazu führen kann, dass der Darm 10.1 aufreißt. Die Zeit, die durchlaufen wird, bis ein Arbeitszyklus der Verschließvorrichtung 40 ausgeführt ist, ist konstant, weil er nur von der Geschwindigkeit abhängt, mit der die Clipperscheren 3.1, 3.2 angetrieben werden. Weil diese Zeit konstant ist, kann errechnet werden, zu welchem Zeitpunkt die Öffnung 3.3 der Clipperscheren 3.1, 3.2 bei der Schließbewegung die Größe des Kalibers K erreicht und der Befüllvorgang spätestens dann gestoppt werden muss und zu welcher Zeit die Öffnung 3.3 bei der Rückbewegung der Clipperscheren 3.1, 3.2 die Größe des Kalibers K wieder erreicht, und der Befüllvorgang wieder fortgesetzt werden kann, ohne dass die Gefahr besteht, dass der Darm 10.1 beschädigt wird, weil der Wurststrang die Öffnung 3.3 passieren kann. Damit kann also mit dem Befüllen wieder begonnen werden, wenn die Clipperscheren 3.1, 3.2 eine Position Pᵢₛₜ erreicht haben, die zeitlich vor der geöffneten Position P_{auf} erreicht wird. Diese Position Pᵢₛₜ ist abhängig von dem ermittelten Kaliber K.

Die beschriebene Ermittlung des Kalibers K erfolgt zu Beginn der Wurstherstellung. Das Befüllen des Darmes 10.1 wird beendet, wenn die Clipperscheren 3.1, 3.2 aus ihrer vollständig geöffneten Position P_{auf} in ihre geschlossene Position P_{zu} gefahren werden und beginnt erst dann wieder, wenn die vollständig geöffnete Position P_{auf} wieder erreicht ist. Damit ist sichergestellt, dass eine Wurst 10 jeden Kalibers K sicher die Clipperscheren 3.1, 3.2 passiert. Nachdem das Kaliber K ermittelt wurde, kann das Befüllen der Hülle / des Darmes 10.1 entsprechend gesteuert werden, sodass der Befüllvorgang gegebenenfalls erst beendet wird, wenn die Clipperscheren 3.1, 3.2 von ihrer vollständig geöffneten Position P_{auf} in ihre geschlossene Position P_{zu} bewegt werden und der Befüllvorgang wieder beginnt, bevor die vollständig geöffnete Position P_{auf} wieder erreicht ist.

Das ermittelte Kaliber K kann auch auf einer Anzeigeeinrichtung der Verschließvorrichtung angezeigt werden, sodass dieser Wert von einer Bedienperson in die Füllvorrichtung eingegeben werden kann. Er muss nicht unmittelbar der Steuerung der Fülleinrichtung zugeführt werden.

### Bezugszeichenliste

- 1: Füllrohr
- 1.1: Auslassöffnung / Ausgang
- 2: Bremse / Darmbremse
- 3.1: Clipperschere
- 3.1.1: Teil
- 3.1.2: Teil
- 3.2: Clipperschere
- 3.2.1: Teil
- 3.2.2: Teil
- 3.3: Öffnung
- 4: Messeinrichtung
- 4.1: Sender
- 4.2: Detektor / Empfänger
- 4.3: Auswerteeinrichtung
- 10: Produkt / Wurst
- 10.1: Hülle / Darm
- 20: Fülleinrichtung
- 20.1: Trichter
- 30: Clipper
- 40: Verschließvorrichtung
- D: Durchmesser
- F: Füllrichtung
- K: Kaliber

## Patentansprüche

1. Vorrichtung zum Verschließen von mittels einer Befüllmaschine mit einer pastösen Masse gefüllten schlauchförmigen Hüllen (10.1) zu Produkten (10), insbesondere von mit Wurstbrät gefüllten Därmen (10.1), mit einem eine Auslassöffnung (1.1) aufweisenden Füllrohr (1), einer Bremse (2), quer zu einer Füllrichtung (F) aufeinander zu bewegbaren Clipperscheren (3.1, 3.2), einer Steuereinheit und einer das Kaliber K der Produkte (10) berührungslos ermittelnden Messeinrichtung (4), **dadurch gekennzeichnet, dass** die Messeinrichtung (4) so eingerichtet ist, dass sie ein Signal zur Anpassung des abgestimmten Betriebs an das Kaliber K der Produkte (10) an die Steuereinheit abgibt.

2. Vorrichtung nach Anspruch 1, **dadurch gekennzeichnet, dass** die Messeinrichtung (4) mindestens aus einem Sender (4.1), einem Detektor (4.2) und einer Auswerteeinrichtung (4.3) besteht.

3. Vorrichtung nach Anspruch 1 oder 2, **dadurch gekennzeichnet, dass** die Messeinrichtung (4) bezogen auf die Füllrichtung (F) hinter der Auslassöffnung (1.1) und vor der Bremse (2) angeordnet ist.

4. Vorrichtung nach Anspruch 1 oder 2, **dadurch gekennzeichnet, dass** die Messeinrichtung (4) bezogen auf die Füllrichtung (F) hinter der Bremse (2) und vor den Clipperscheren (3.1, 3.2) angeordnet ist.

5. Vorrichtung nach Anspruch 1 oder 2, **dadurch gekennzeichnet, dass** die Messeinrichtung (4) bezogen auf die Füllrichtung (F) hinter den Clipperscheren (3.1, 3.2) angeordnet ist.

6. Vorrichtung nach Anspruch 3, **dadurch gekennzeichnet, dass** die Messeinrichtung (4) zur Bestimmung des Kalibers (K) den Durchmesser (D) der gerafften Hülle (10.1) bestimmt.

7. Vorrichtung nach Anspruch 4 oder 5, **dadurch gekennzeichnet, dass** die Messeinrichtung (4) das Kaliber (K) der mit pastöser Masse befüllten Hülle (10.1) bestimmt.

8. Verfahren zum Betreiben einer Vorrichtung zum Verschließen von mit einer pastösen Masse gefüllten schlauchförmigen Hüllen (10.1) zu Produkten (10) mit einem eine Auslassöffnung (1.1) aufweisenden Füllrohr (1), einer Bremse (2), quer zu einer Füllrichtung (F) aufeinander zu bewegbaren Clipperscheren (3.1, 3.2) und einer das Kaliber K der Produkte (10) berührungslos ermittelnden Messeinrichtung (4), in dem das Befüllen der Hülle (10.1) mit pastöser Masse unterbrochen ist, wenn die Clipperscheren (3.1, 3.2) aus einer geschlossenen Position P_{zu}, in der sie zueinander einen minimalen Abstand einnehmen und die in die Hülle (10.1) eingeführte pastöse Masse verdrängt haben, in Richtung einer geöffneten Position P_{auf}, in der sie zueinander einen maximalen Abstand einnehmen, bewegt werden, **dadurch gekennzeichnet, dass** mit dem Befüllen der Hülle (10.1) mit pastöser Masse wieder begonnen wird, wenn die Clipperscheren (3.1, 3.2) eine Position Pᵢₛₜ erreicht haben, in der ihr Abstand zueinander mindestens so groß wie das von der Messeinrichtung (4) ermittelte Kaliber (K) ist, und diese Position Pᵢₛₜ zeitlich vor der geöffneten Position P_{auf} erreicht wird.

## Claims

1. Device for closing tubular casings (10.1) filled with a pasty material by means of a filling machine to form products (10), in particular intestine casings (10.1) filled with sausage meat, having a filling tube (1) with an outlet opening (1.1), a brake (2), clipper shears (3.1, 3.2) that can be moved towards one another transversely to a filling direction (F), a control unit and a measuring device (4) that determines the caliber K of the products (10) in a contactless manner, **characterized in that** the measuring device (4) is configured to transmit a signal for adapting the coordinated operation to the caliber K of the products (10) to the control unit.

2. Device according to Claim 1, **characterized in that** the measuring device (4) comprises at least a transmitter (4.1), a detector (4.2) and an evaluation device (4.3).

3. Device according to claim 1 or 2, **characterized in that** the measuring device (4) is arranged downstream of the outlet opening (1.1) and upstream of the brake (2) in relation to the filling direction (F).

4. Device according to claim 1 or 2, **characterized in that** the measuring device (4) is arranged downstream of the brake (2) and upstream of the clipper shears (3.1, 3.2) with respect to the filling direction (F).

5. Device according to claim 1 or 2, **characterized in that** the measuring device (4) is arranged downstream of the clipper shears (3.1, 3.2) in relation to the filling direction (F).

6. Device according to claim 3, **characterized in that** the measuring device (4) determines the diameter (D) of the gathered casing (10.1) to determine the caliber (K).

7. Device according to claim 4 or 5, **characterized in that** the measuring device (4) determines the caliber (K) of the casing (10.1) filled with pasty material.

8. Method for operating a device for closing tubular casings (10.1) filled with a pasty material to form products (10), comprising a filling tube (1) having an outlet opening (1.1), a brake (2), clipper shears (3.1, 3.2) that can be moved towards each other transversely to a filling direction (F), and a measuring device (4) that determines the caliber K of the products (10) in a contactless manner, in which the filling of the casing (10.1) with pasty material is interrupted when the clipper shears (3.1, 3.2) are moved from a closed position P_{zu} to an open position P_{auf}, in which they are at a maximum distance from one another, and having displaced the pasty material introduced into the casing (10.1), **characterized in that** the filling of the casing (10.1) with pasty material is restarted when the clipper shears (3.1, 3.2) have reached a position Pᵢₛₜ in which their distance from one another is at least as great as the caliber (K) determined by the measuring device (4), and this position Pᵢₛₜ is temporally reached before the opened position P_{auf}.

## Revendications

1. Dispositif pour fermer des enveloppes tubulaires (10.1) remplies d'une masse pâteuse au moyen d'une machine de remplissage pour obtenir des produits (10), en particulier des boyaux (10.1) remplis de chair à saucisse, comprenant un tube de remplissage (1) présentant une ouverture de sortie (1.1), un frein (2), des cisailles de clippage (3.1, 3.2) mobiles les unes vers les autres transversalement à une direction de remplissage (F), une unité de commande et un organe de mesure (4) déterminant sans contact le calibre K des produits (10),
**caractérisé en ce que** l'organe de mesure (4) est agencé de manière à délivrer à l'unité de commande un signal pour l'adaptation du fonctionnement accordé au calibre K des produits (10).

2. Dispositif selon la revendication 1,
**caractérisé en ce que** l'organe de mesure (4) est constitué au moins d'un émetteur (4.1), d'un détecteur (4.2) et d'un organe d'évaluation (4.3).

3. Dispositif selon la revendication 1 ou 2,
**caractérisé en ce que** l'organe de mesure (4) est disposé derrière l'ouverture de sortie (1.1) et devant le frein (2), par rapport à la direction de remplissage (F).

4. Dispositif selon la revendication 1 ou 2,
**caractérisé en ce que** l'organe de mesure (4) est disposé derrière le frein (2) et devant les cisailles de clippage (3.1, 3.2), par rapport à la direction de remplissage (F).

5. Dispositif selon la revendication 1 ou 2,
**caractérisé en ce que** l'organe de mesure (4) est disposé derrière les cisailles de clippage (3.1, 3.2), par rapport à la direction de remplissage (F).

6. Dispositif selon la revendication 3,
**caractérisé en ce que** l'organe de mesure (4) détermine le diamètre (D) de l'enveloppe plissée (10.1) pour déterminer le calibre (K).

7. Dispositif selon la revendication 4 ou 5,
**caractérisé en ce que** l'organe de mesure (4) détermine le calibre (K) de l'enveloppe (10.1) remplie de masse pâteuse.

8. Procédé de fonctionnement d'un dispositif pour fermer des enveloppes tubulaires (10.1) remplies d'une masse pâteuse pour obtenir des produits (10), comprenant un tube de remplissage (1) présentant une ouverture de sortie (1.1), un frein (2), des cisailles de clippage (3.1, 3.2) mobiles les unes vers les autres transversalement à une direction de remplissage (F), et un organe de mesure (4) déterminant sans contact le calibre K des produits (10), dans lequel le remplissage de l'enveloppe (10.1) avec la masse pâteuse est interrompu lorsque les cisailles de clippage (3.1, 3.2) sont déplacées d'une position fermée P_{zu}, dans laquelle elles présentent une distance minimale les unes des autres et ont refoulé la masse pâteuse introduite dans l'enveloppe (10.1), en direction d'une position ouverte P_{auf}, dans laquelle elles présentent une distance maximale les unes des autres,
**caractérisé en ce que** le remplissage de l'enveloppe (10.1) avec une masse pâteuse est redémarré lorsque les cisailles de clippage (3.1, 3.2) ont atteint une position Pᵢₛₜ dans laquelle leur distance mutuelle est au moins aussi grande que le calibre (K) déterminé par l'organe de mesure (4), et cette position Pᵢₛₜ est atteinte temporellement avant la position ouverte P_{auf}.
